# EUROPEAN PATENT APPLICATION

(11) **EP 4 647 301 A1**
(43) Date of publication of application: **12.11.2025**
(21) Application number: 25174197.1
(22) Date of filing: 05.05.2025
(51) Int. Cl.: B60Q 1/30, F21S 43/14, F21S 43/15, F21S 43/239, F21S 43/243, F21S 43/245, F21S 43/20, F21S 43/31, F21S 43/50, F21W 103/35

(54) **AUTOMOTIVE LIGHTING UNIT**

(30) Priority: 09.05.2024 IT 202400010516
(71) Applicant: FERRARI S.p.A., 41100 Modena (IT)
(72) Inventor: CARDILLI, Maria Carmela, 41100 MODENA (IT); DUSINI, Luca, 41100 MODENA (IT); MORUZZI, Patrizio, 41100 MODENA (IT); NICOLETTA, Epifanio Alberto, 41100 MODENA (IT); RIPA BUSCHETTI DI MEANA, Gabriele, 10130 TORINO (IT); LORENZONI, Massimiliano, 10130 TORINO (IT)
(74) Representative: Studio Torta S.p.A.

(57) **Abstract**

Automotive lighting unit (1) comprising: a rear casing (2), which is adapted to be fixed to the vehicle; a front bezel (3; 30), which is arranged to close the mouth of the rear casing (2) so as to form a rigid container (5), and is centrally provided with a through slit (4) oblong in shape; a light-guide plate (6), which is made of photoconductive material and is inserted in pass-through manner in said slit (4) of the front bezel (3; 30); a lighting assembly (7), which emits light on command and is arranged inside said rigid container (5) facing a rear sidewall (6a) of the light-guide plate (6), so as to direct the light produced within the body of the light-guide plate (6), through said rear sidewall (6a), in such a way that the light travels within the light-guide plate (6) by total internal reflection up to the front sidewall (9b) of the same light-guide plate (6); and a diffusing filter (8), which is interposed between the lighting assembly (7) and the light-guide plate (6) so as to be crossed by the light emitted by said lighting assembly (7), and is structured to diffuse the light directed towards the rear sidewall (6a) of the light-guide plate (6).

## Description

### CROSS-REFERENCE TO RELATED APPLICATIONS

This patent application claims priority from Italian patent application no. 102024000010516 filed on May 9, 2024, the entire disclosure of which is incorporated herein by reference.

### TECHNICAL FIELD

The invention relates to an automotive lighting unit.

More in detail, the present invention preferably relates to a taillight for cars and similar vehicles.

Even more in detail, the present invention preferably relates to a taillight for cars and similar motor vehicles, which is adapted to be placed, in a raised position, at centre of the rear part of the vehicle, with the sole function of signalling the activation of the brakes of the vehicle. Use to which the following disclosure will make explicit reference without because of this lacking generality.

### STATE OF THE ART

As is known, recently manufactured cars are equipped, in addition to the traditional two taillights that are located roughly at the two corners of the rear part of the vehicle, also with a third taillight, traditionally called third brake light, which is located in the rear part of the vehicle, astride the vertical midplane of the vehicle and at a height from ground generally higher than that of the two main taillights, and solely has the function of signalling the activation of the brakes of the vehicle simultaneously with the two lateral taillights.

In other words, the central taillight is a specific lighting device for cars and similar motor vehicles, which has to be placed in the rear part of the vehicle, in a raised position at the centre thereof, and is capable of emitting, on command, exclusively a red light signal, which meets the photometric type-approval specifications (light colour and distribution) provided for the light signal associated with the activation of the vehicle brakes.

Generally, the central taillight further is oblong in shape and is usually placed, in a horizontal position, on the upper or lower edge of the rear window of the vehicle, so as not to excessively restrict the field of view of the person driving the vehicle.

More in detail, in the most popular cars on the market, the central taillight generally comprises: a rigid rear casing, usually made of an opaque plastic material, which is roughly shaped like an oblong basin and is structured so as to be firmly fitted into a more or less complementary-shaped compartment, which is specifically made in the bodywork of the vehicle, along the frame designed to accommodate the perimeter edge of the rear window of the vehicle; a rigid front half-shell with a structure transparent to visible light, which is usually made of a transparent or semi-transparent, red-coloured plastic material and is arranged to close the mouth of the rear casing; and an electrically-powered lighting assembly, which is located inside the rear casing, under the front half-shell, and is selectively adapted to backlight the front half-shell.

More in detail, the lighting assembly is entirely housed inside the closed container formed by the rear casing and the front half-shell, and usually comprises: a series of concave reflecting bodies, which are arrangedone side by side the other, close to the bottom of the rear casing, and are provided with concave reflecting surfaces with a roughly semi-parabolic profile, each of which is oriented so as to reflect the incident light towards a facing transparent or semi-transparent sector of the front half-shell; and a series of high-power LEDs (acronym for Light Emitting Diode), which are distributed on a printed circuit board that is placed alongside the row of reflecting bodies, so that each LED is aligned with a respective reflecting body and can direct the produced light towards the reflecting surface of the same reflecting body. The light is then reflected and directed towards the front half-shell by the reflecting surface of the reflecting body.

Although working very well, the taillight described above is unwelcome to some designers, because the red front half-shell is too visible and, thus, ruins the aesthetics of the rear part of the vehicle.

In addition, the taillight described above fails to emit a light beam having a sufficiently homogeneous light intensity along the entire extension of the taillight, or rather along the entire extension of the front half-shell.

Finally, due to its dimensions, the central taillight described above has proved unsuitable to be installed in high-performance road passenger cars, which notoriously have a very inclined and/or small-sized rear window.

### SUMMARY OF THE INVENTION

Aim of the present invention is to provide a central taillight more compact than the current ones, which moreover offers a more uniform light distribution.

In accordance with these aims, according to the present invention there is provided an automotive lighting unit as defined in claim 1 and preferably, though not necessarily, in any one of the claims depending on it.

### BRIEF DESCRIPTION OF THE FIGURES

The present invention will now be described with reference to the accompanying drawings which illustrate a non-limiting embodiment thereof, wherein:
- Figure 1 is a perspective view of an automotive lighting unit realized according to the teachings of the present invention;
- Figure 2 is a partially exploded, perspective view of the automotive lighting unit shown in Figure 1, with parts removed for clarity's sake;
- Figures 3 and 4 are side views of the automotive lighting unit shown in Figures 1 and 2, with sectional parts and parts removed for clarity's sake;
- Figure 5 is a side view of an embodiment variation of the automotive lighting unit shown in the preceding figures, with sectional parts and parts removed for clarity's sake; whereas
- Figure 6 is a side view of an embodiment variation of the lighting assembly of the automotive lighting unit shown in the preceding figures, with sectional parts and parts removed for clarity's sake.

### DETAILED DESCRIPTION OF THE EMBODIMENTS

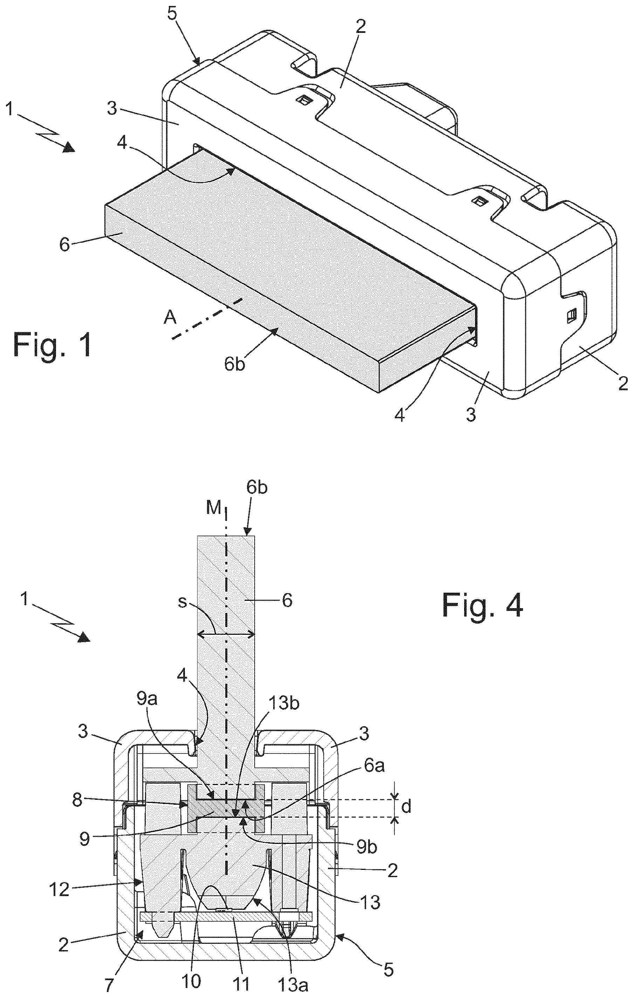

With reference to figure 1, number 1 denotes, as a whole, an automotive lighting unit, namely a lighting device, which is suited to be located on a motor vehicle and is adapted to emit, on command, a light signal with predetermined characteristics.

More in detail, the automotive lighting unit 1 is particularly adapted to be placed in the rear part of a car or similar motor vehicle.

In other words, the automotive lighting unit 1 is preferably a taillight for cars and similar motor vehicles.

In addition, the automotive lighting unit 1 is preferably also adapted to emit, on command, a light signal indicative of the activation of the vehicle brakes.

In other words, the automotive lighting unit 1 is preferably a lighting device, which is adapted to be placed in the rear part of a generic motor vehicle and is capable of emitting, on command, a light signal that advantageously meets the photometric type-approval specifications (colour and light distribution) provided for the light signal associated with the activation of the vehicle brakes.

Moreover, the automotive lighting unit 1 is preferably structured so that the emitted light signal has a prevailing component of the light beam oriented parallel to a predetermined optical reference axis A.

In addition, the automotive lighting unit 1 is preferably furthermore structured so that the optical axis A is substantially parallel to the vehicle longitudinal axis when the automotive lighting unit 1 is fixed/placed on the vehicle.

More in detail, the automotive lighting unit 1 is preferably adapted to be placed substantially at centre of the rear part of the vehicle, advantageously in a raised position with respect to the main taillights of the vehicle, and is adapted to (only) emit an advantageously red-coloured, light signal on activation of the brakes of the same vehicle.

In other words, the automotive lighting unit 1 is preferably a central taillight (third brake light) for cars and similar motor vehicles.

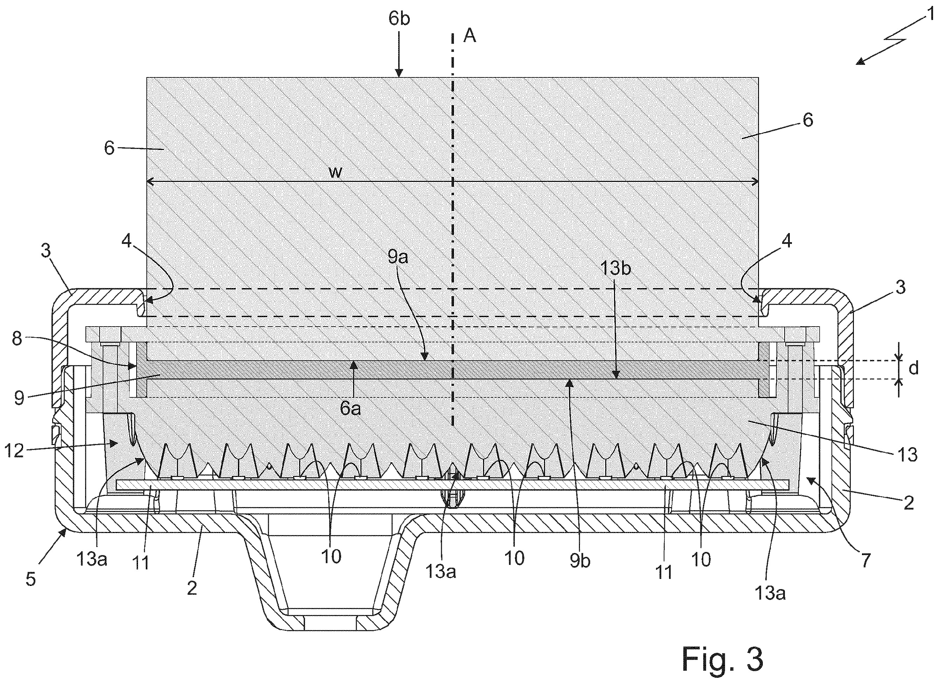

With reference to figures 1, 2, 3 and 4, in particular, the automotive lighting unit 1 comprises: a rear casing 2 with a rigid and advantageously also opaque (to visible light) structure, which is concave in shape and is adapted to be firmly fixed to the bodywork or other rigid part of the vehicle (not shown), preferably inside a specific receiving seat; and a front bezel 3 with a rigid and advantageously also opaque (to visible light) structure, separate and distinct from the rear casing 2, which is centrally provided with an oblong-shaped and advantageously also substantially straight, through slot/slit 4, and which is arranged to close the mouth of the rear casing 2, so as to form, together with the rear casing 2, a closed and internally hollow rigid container 5.

The automotive lighting unit 1 furthermore comprises: a light-guide plate 6 with a suitable thickness, which is made of an advantageously transparent, photoconductive material and is fitted in pass-through manner into the oblong slit 4 of front bezel 3 so as to have a first portion inside the rigid container 5 formed by the rear casing 2 and the front bezel 3, and a second portion that juts out cantilevered of the rigid container 5; and an electrically-powered lighting assembly 7, which emits light on command and is placed inside the rigid container 5 facing a first lateral sidewall 6a of the light-guide plate 6, hereinafter referred to as rear sidewall, so as to direct the produced light into the body of the light-guide plate 6, through said rear sidewall 6a.

The light then travels inside the body of the light-guide plate 6 by total internal reflection and freely comes out from a second lateral sidewall 6b of the light-guide plate 6, hereinafter referred to as front sidewall, opposite said rear sidewall 6a.

More in detail, the lighting assembly 7 preferably has an oblong shape/structure and extends inside the rigid container 5 parallel to the rear sidewall 6a of the light-guide plate 6, advantageously substantially along the entire length of the same rear sidewall 6a.

Preferably the lighting assembly 7 is furthermore structured so as to emit, on command, red-coloured light.

In addition, the automotive lighting unit 1 moreover comprises a diffusing filter 8, which is interposed between the lighting assembly 7 and the light-guide plate **6,** so as to be crossed by the light emitted by the lighting assembly 7, and is structured so as to diffuse the light directed towards the rear sidewall 6a of the light-guide plate 6, advantageously substantially randomly.

More in detail, the diffusing filter 8 preferably has an oblong shape/structure and is located inside the rigid container 5 formed by the rear casing 2 and the front bezel 3, substantially flush with the rear sidewall 6a of the light-guide plate 6.

Preferably, the diffusing filter 8 is moreover structured so as to diffuse the light coming from the lighting assembly 7 substantially over the entire length and/or extension of the rear sidewall 6a of the light-guide plate 6.

More in detail, the diffusing filter 8 is preferably structured so as to diffuse the light coming from the lighting assembly 7 in a substantially even manner over at least 75% of the length and/or extension of the rear sidewall 6a of the light-guide plate 6.

With reference to Figures 1, 2, 3 and 4, in particular, the rear casing 2 is preferably shaped substantially like a basin advantageously oblong and/or preferably has a monolithic structure, i.e. it is manufactured as one single piece.

In addition, the rear casing 2 is preferably made of a polymeric material advantageously via injection moulding.

Preferably, the rear casing 2 is moreover provided, on the outer surface, with one or more connecting appendages, which allow the rigid container 5, or rather the rear casing 2, to be secured in rigid manner to the bodywork or other rigid part of the vehicle (not shown).

In the example shown, in particular, the rear casing 2 is preferably substantially rectangular in shape and is preferably made of acrylonitrile-butadiene-styrene (ABS) or other opaque polymer material.

The front bezel 3, on the other hand, preferably has a shape substantially complementary to the mouth of the rear casing 2 and is preferably firmly secured to the rear casing 2 advantageously by means of a snap locking system.

Preferably, the oblong slit 4 of front bezel 3 furthermore has a shape substantially complementary to the section of the light-guide plate 6.

In addition, the front bezel 3 preferably has a monolithic structure, i.e. it is manufactured as one single piece, and is preferably made of a polymeric material advantageously via injection moulding.

In the example shown, in particular, the front bezel 3 is preferably made of acrylonitrile-butadiene-styrene (ABS) or other opaque (to visible light) polymeric material.

With reference to Figures 1, 2, 3 and 4, the light-guide plate 6, in turn, is preferably substantially flat and its front 6b and rear 6a sidewalls are preferably substantially parallel to and aligned with one another and/or perpendicular to the lighting-unit optical axis A.

In other words, the front 6b and rear 6a sidewalls of light-guide plate 6 are preferably substantially straight and advantageously also substantially coplanar to one another.

Preferably, the light-guide plate 6 furthermore has a thickness s ranging between 5 and 20 mm (millimetres) and more conveniently equal to approximately 10 mm.

In addition, the light-guide plate 6 preferably has a monolithic structure, i.e. it is manufactured as one single piece, and is preferably made of a transparent (to visible light) polymeric material advantageously via injection moulding.

In the example shown, in particular, the light-guide plate 6 is preferably substantially rectangular in shape and is preferably made of transparent (to visible light) polymethyl-methacrylate (PMMA) .

Alternatively, the light-guide plate 6 may also be made of transparent polycarbonate (PC) or glass.

The oblong slit 4 of the front bezel 3, in turn, is preferably substantially rectangular in shape. Moreover, the oblong slit 4 has a height that preferably rounds up the thickness s of the light-guide plate 6 and/or a length that preferably rounds up the width w of the light-guide plate 6.

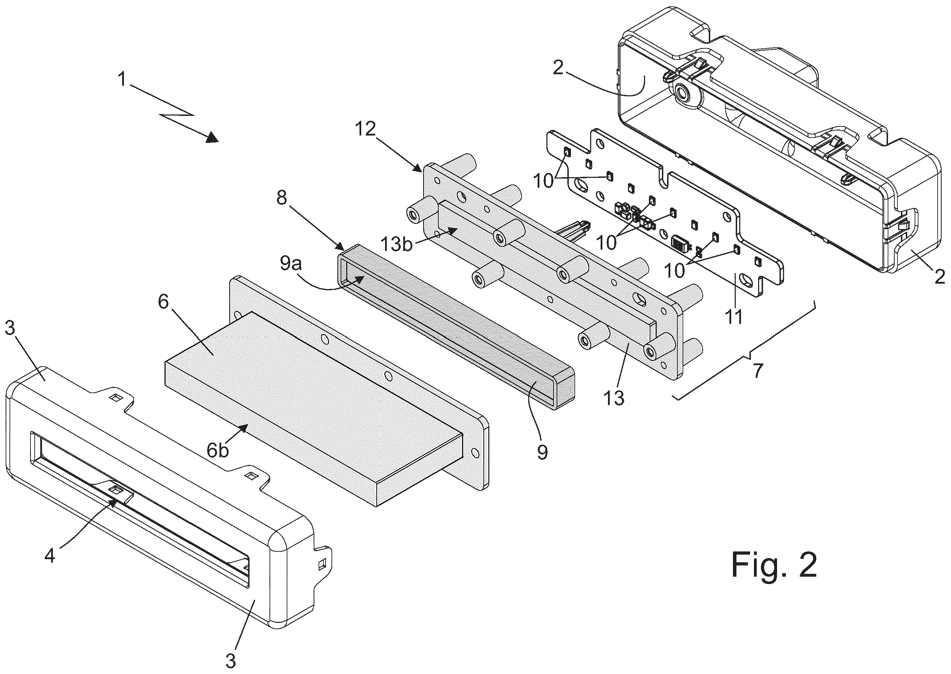

With reference to Figures 2, 3 and 4, the diffusing filter 8, on the other hand, preferably comprises a semi-transparent rigid bar 9, which is made of a transparent or semi-transparent material with diffusing properties, namely is capable of diffusing the light travelling through it, and is arranged to cover the rear sidewall 6a of the light-guide plate 6, so as to be crossed by the light coming from the lighting assembly 7.

In addition, the semi-transparent rigid bar 9 is preferably dimensioned so as to take up the whole space between the lighting assembly 7 and the rear sidewall 6a of the light-guide plate 6.

More in detail, the semi-transparent rigid bar 9 preferably has a monolithic structure and is preferably made of a transparent polymeric material that incorporates reflecting microspheres and/or other types of reflecting corpuscles with similar dimensions.

Preferably, the semi-transparent bar 9 is furthermore provided with a blind seat 9a, which has a shape substantially complementary to the rear sidewall 6a of the light-guide plate 6 and is adapted to be engaged by the rear sidewall 6a of the light-guide plate 6.

In the example shown, in particular, the semi-transparent rigid bar 9 is preferably made of diffusing polymethyl-methacrylate (PMMA) or diffusing polycarbonate (PC), advantageously via injection moulding.

With reference to Figures 2, 3 and 4, on the other hand, the lighting assembly 7 preferably comprises: a series of LEDs 10, which are suitably distributed on a printed circuit board 11 that is placed close to the bottom of the rigid container 5, or rather close to the bottom of the rear casing 2, so that the single LEDs 10 can light up the diffusing filter 8 and the rear sidewall 6a of the light-guide plate 6 that is located behind the diffusing filter 8; and a converging optical group 12, which is located immediately above the LEDs 10, i.e. between the LEDs 10 and the diffusing filter 8, and is structured so as to deflect or, rather, concentrate towards the diffusing filter 8 the light beam exiting the individual LEDs 10 .

Furthermore, the LEDs 10 are preferably structured so as to emit red light.

More in detail, the converging optical group 12 preferably has an oblong shape/structure and is preferably located spaced in front of the rear sidewall 6a of the light-guide plate 6, advantageously substantially along the entire length of the rear sidewall 6a.

The converging optical group 12, in addition, is preferably structured so as to direct the light beam exiting the individual LEDs 10 towards corresponding sections of the diffusing filter 8, advantageously also collimating the light rays exiting the single LEDs 10 in a direction substantially parallel to the lighting-unit optical axis A and/or substantially perpendicular to the rear sidewall 6a of the light-guide plate 6.

Preferably, the lighting assembly 7 is furthermore located at a distance d from the rear sidewall 6a of the light-guide plate 6 preferably ranging between 2 and 8 mm (millimetres) and more conveniently equal to approximately 3 mm.

In other words, the converging optical group 12 is preferably located in front of the rear sidewall 6a of the light-guide plate 6, at a distance d from the rear sidewall 6a preferably ranging between 2 and 8 mm (millimetres) and more conveniently equal to approximately 3 mm.

The diffusing filter 8, or rather the semi-transparent rigid bar 9, in turn, is preferably dimensioned so as to take up the whole space between the converging optical group 12 and the rear sidewall 6a of light-guide plate 6.

In the example shown, in particular, the printed circuit board 11 preferably has an oblong platelike structure and is preferably located adjacent to the bottom of the rigid container 5, or rather adjacent to the bottom of the rear casing 2, so as to be locally substantially parallel to the rear sidewall 6a of light-guide plate 6 and/or substantially perpendicular to the lighting-unit optical axis A. Preferably, the LEDs 10 are moreover spaced apart in a substantially even manner along a substantially straight line, which advantageously lies on the midplane M of the light-guide plate 6.

The converging optical group 12, on the other hand, preferably has an oblong structure and extends inside the rigid container 5, advantageously substantially grazing the diffusing filter 8.

Preferably, the converging optical group 12 is furthermore substantially coplanar to the light-guide plate 6 and/or to the diffusing filter 8.

The converging optical group 12, in addition, preferably has a monolithic structure, i.e. it is manufactured as one single piece, and is preferably made of a transparent (to visible light) polymeric material advantageously via injection moulding.

More in detail, the converging optical group 12 preferably comprises a transparent rigid body 13, advantageously made of a transparent (to visible light) polymeric material, which is oblong in shape and extends inside the rigid container 5 substantially grazing the diffusing filter 8.

In addition, the transparent rigid body 13 is preferably substantially coplanar to the light-guide plate 6 and to the diffusing filter 8, and is preferably provided with a series of advantageously substantially ogival-shaped, projecting protrusions 13a which jut out cantilevered each towards a respective LED 10 and are shaped so as to concentrate, or more advantageously collimate, the light beams exiting the respective and facing LEDs 10 towards the diffusing filter 8.

Moreover, the transparent rigid body 13 is preferably provided, on the opposite side with respect to the LEDs 10, with a protruding ridge or rib 13b, which locally faces and is aligned with the rear sidewall 6a of the light-guide plate 6 and advantageously also copies the shape of the rear sidewall 6a. In other words, the protruding ridge or rib 13b is preferably substantially straight and is preferably aligned with, or rather coplanar to, the rear sidewall 6a of the light-guide plate 6.

The semi-transparent bar 9, in turn, is preferably provided with a second blind seat 9b, which has a shape substantially complementary to the protruding ridge 13b of the transparent rigid body 13 and is adapted to be engaged by the protruding ridge 13b.

In other words, the semi-transparent bar 9 is preferably arranged in abutment on both the rear sidewall 6a of the light-guide plate 6 and the transparent rigid body 13, or rather the protruding ridge 13b of the transparent rigid body 13.

Preferably, the diffusing filter 8, or rather the semi-transparent bar 9, is therefore coupled both to the rear sidewall 6a of the light-guide plate 6 and to the lighting assembly 7, or rather to the converging optical group 12 of the lighting assembly 7.

In the example shown, in particular, the converging optical group 12, or rather the transparent rigid body 13, is preferably made of transparent polymethyl-methacrylate (PMMA), advantageously via injection moulding.

Alternatively, the converging optical group 12, or rather the transparent rigid body 13, may also be made of transparent polycarbonate (PC) or glass.

Operation of the automotive lighting unit 1 is immediately inferable from the above description and, therefore, does not require further explanations.

The advantages connected to the special structure of the automotive lighting unit 1 are remarkable.

Experimental tests have shown that the intensity of the light coming out of the front sidewall 6b of the light-guide plate 6 remains substantially constant along the entire extension of the front sidewall 6b.

In addition, since the diffusing filter 8 is located inside the rigid container 5 formed by the rear casing 2 and the front bezel 3, the automotive lighting unit 1 has no visible coloured parts, so it is practically invisible when it is switched off.

The front sidewall 6b of the light-guide plate 6 is moreover smooth and lacks optics making the aesthetics of the automotive lighting unit 1 less showy.

Finally, being equal the emitted light signal, the automotive lighting unit 1 has significantly smaller dimensions compared to currently known central taillights and, therefore, is suited to be installed in high-performance road passenger cars, which notoriously have a very inclined and/or small-sized rear window.

It is finally clear that modifications and variations may be made to the automotive lighting unit 1 without however departing from the scope of the present invention.

For example, the diffusing filter 8 may be realized in one single piece together with the light-guide plate 6, advantageously via overmoulding or co-moulding.

In other words, the semi-transparent bar 9 may be realized in one single piece together with the light-guide plate 6, advantageously via overmoulding or co-moulding.

In addition, the converging optical group 12 may be realized in one single piece together with the diffusing filter 8 advantageously via overmoulding or co-moulding.

In other words, the transparent rigid body 13 may be realized in one single piece together with the light-guide plate 9 advantageously via overmoulding or co-moulding.

Optionally, the diffusing filter 8 is moreover coloured so as to change the colour of the light coming from the lighting assembly 7.

More in detail, the semi-transparent bar 9 may be made of a transparent and coloured polymeric material, advantageously red, which incorporates reflecting microspheres and/or other types of reflecting corpuscles with similar dimensions.

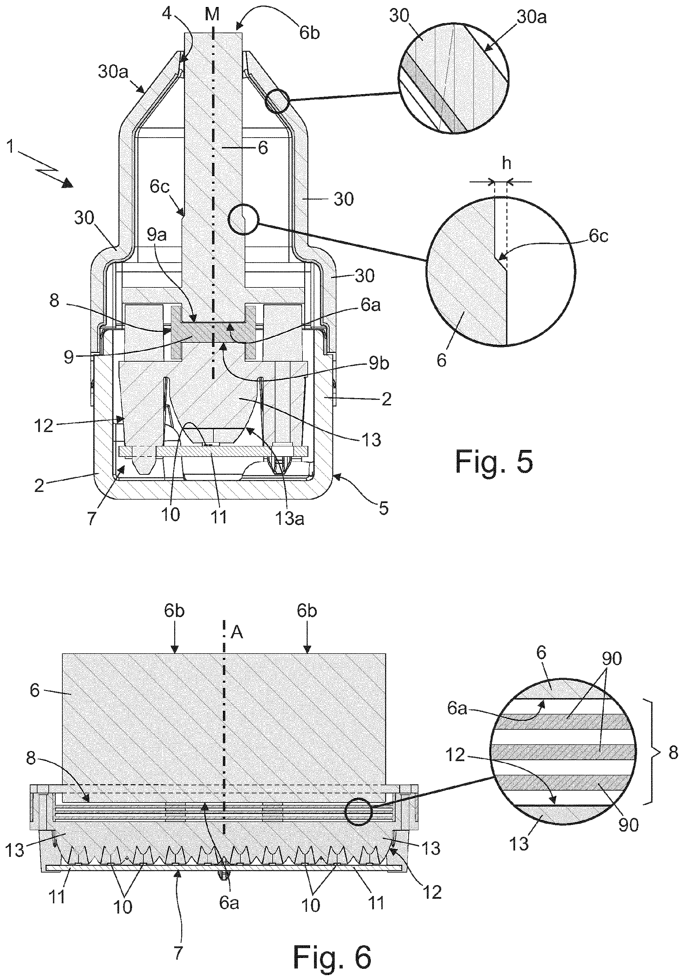

With reference to Figure 5, in an embodiment variation, furthermore, the front bezel 3 is replaced by a front bezel 30 that is provided with a central sector 30a with a translucent and optionally also coloured and advantageously also projecting structure, which surrounds and delimits the through slot/slit 4 and is preferably moreover shaped substantially like a hopper.

In addition, the light-guide plate 6 is preferably structured so as to also backlight the central sector 30a of the front bezel 30.

The replacement of the front bezel 3 with the front bezel 30 allows the automotive lighting unit 1 to be easily and quickly adapted to SAE type-approval regulations (valid in the USA and Canada) or to UN/ECE type-approval regulations.

More in detail, in this embodiment variation, at least one of and, more conveniently, both the main opposite faces of the light-guide plate 6 are preferably provided, advantageously roughly below the translucent central sector 30a, with at least one transversal shoulder or step 6c with a height h advantageously ranging between 0,4 to 1,1 mm (millimetres), which preferably extends substantially parallel to the front 6b and/or rear 6a sidewall of the light-guide plate 6 and is structured so as to cause a localised coming out of part of the light travelling inside the body of the light-guide plate 8 by total internal reflection. This light, after having come out of the main face or faces of the light-guide plate 6, is adapted to backlight the translucent central sector 30a of front bezel 30.

The translucent central sector 30a of front bezel 30, in turn, preferably has a sandwich structure, which comprises a layer of transparent polymeric material and a layer of coloured semi-transparent polymeric material, advantageously with a smaller thickness.

In the example shown, in particular, the entire body of the front bezel 30 preferably has a translucent and advantageously also coloured structure.

More in detail, in the example shown, the entire front bezel 30 preferably has a double-layer structure, which comprises a transparent (to visible light) half-shell made of polymethyl methacrylate (PMMA) and a thin film made of semi-transparent (to visible light) or diffusing polymethyl methacrylate (PMMA), optionally also coloured (red), which at least partially covers the inner surface of the half-shell.

With reference to Figure 6, in a more sophisticated embodiment variation, furthermore, the diffusing filter 8 comprises, instead of the semi-transparent bar 9, a plurality of advantageously plate-like, semi-transparent rigid septa 90, which have a structure capable of diffusing the light and are arranged one spaced in front of the other in the space between the rear sidewall 6a of light-guide plate 6 and the lighting assembly 7, so as to be crossed in sequence by the light coming from the lighting assembly 7.

More in detail, each semi-transparent septum 90 is preferably made of a transparent (to visible light) material, optionally also coloured, and has one or both of its main faces suitably satinized so as to substantially randomly diffuse the light travelling through the semi-transparent septum 90.

In addition, the semi-transparent septa 90 are preferably locally substantially parallel to one another and/or to the rear sidewall 6a of light-guide plate 6. Preferably, the semi-transparent rigid septa 90 are moreover substantially perpendicular to the lighting-unit optical axis A.

Furthermore, the semi-transparent septa 90 preferably have all substantially the same thickness and/or are preferably substantially evenly distributed in the space separating the rear sidewall 6a of light-guide plate 6 from the lighting assembly 7.

More in detail, each semi-transparent septum 90 has a thickness preferably ranging between 0,8 and 1,2 mm and more conveniently equal to about 1 mm, and is preferably made of a transparent polymeric material, possibly also coloured.

Moreover, at least one face and more conveniently both faces of the semi-transparent septum 90 are suitably satinized so as to substantially randomly diffuse the incident light.

Optionally, the degree of silk-finish (surface roughness) of the face or faces of the semi-transparent septum 90 may vary from one semi-transparent septum 90 to another.

Preferably, the distance between two consecutive semi-transparent septa 90 furthermore ranges between 0,8 and 1,2 mm and is more conveniently equal to approximately 1 mm.

In other words, the distance between two semi-transparent septa 90 is substantially equal to the thickness of the semi-transparent septa 90.

In the example shown herein, in particular, each semi-transparent septum 90 is preferably manufactured from transparent poly-methyl methacrylate (PMMA) or polycarbonate (PC), preferably by means of injection moulding, and has the surface of both faces suitably satinized so as to randomly diffuse the light travelling through the septum.

Optionally, at least part of the semi-transparent septa 90 of the diffusing filter 8 can also form one single body, which is advantageously manufactured as one single piece together with the light-guide plate 6.

In addition or alternatively, one or more semi-transparent septa 90 can be made (entirely) of a material with diffusing properties, possibly also coloured.

More in detail, one or more semi-transparent septa 90 can be made (entirely) of a transparent polymer material, possibly also coloured, which incorporates reflecting microspheres and/or other types of reflecting corpuscles with similar dimensions.

Optionally, the density of reflecting corpuscles in the polymer material can vary from one semi-transparent septum 90 to another.

## Claims

1. Automotive lighting unit (1) **characterized by** comprising: a concave rear casing (2), which is adapted to be fixed to the vehicle; a front bezel (3; 30), which is arranged to close the mouth of the rear casing (2) so as to form a rigid container (5), and is centrally provided with a through slit (4) oblong in shape; a light-guide plate (6), which is made of photoconductive material and is inserted in pass-through manner in said slit (4) of the front bezel (3; 30); a lighting assembly (7), which emits light on command and is arranged inside said rigid container (5) facing a rear sidewall (6a) of the light-guide plate (6), so as to direct the light produced within the body of the light-guide plate (6), through said rear sidewall (6a), so that the light travel within the light-guide plate (6) by total internal reflection up to a the front sidewall (9b) of the same light-guide plate (6); and a diffusing filter (8), which is interposed between the lighting assembly (7) and the light-guide plate (6) so as to be crossed by the light emitted by said lighting assembly (7), and is structured to diffuse the light directed towards the rear sidewall (6a) of the light-guide plate (6).

2. Automotive lighting unit according to claim 1, wherein said diffusing filter (8) is oblong in shape and is arranged inside said rigid container (5) substantially grazing the rear sidewall (6a) of the light-guide plate (6).

3. Automotive lighting unit according to claim 1 or 2, wherein said lighting assembly (7) is oblong in shape and is arranged inside said rigid container (5) substantially grazing said diffusing filter (8).

4. Automotive lighting unit according to claim 1, 2 or 3, in which the light-guide plate (6) is substantially flat.

5. Automotive lighting unit according to any of the preceding claims, in which the oblong slit (4) of the front bezel (3; 30) has a shape substantially complementary to the section of the light-guide plate (6).

6. Automotive lighting unit according to any one of the preceding claims, wherein said diffusing filter (8) comprises a semi-transparent bar (9), which is made of a material with diffusing properties and is arranged to cover the rear sidewall (6a) of the light-guide plate (6), so as to be crossed by the light arriving from the lighting assembly (7).

7. Automotive lighting unit according to claim 6, wherein said semi-transparent bar (9) is made of a transparent polymeric material that incorporates reflecting corpuscles within itself.

8. Automotive lighting unit according to any one of claims 1 to 5, wherein said diffusing filter (8) comprises a plurality of semi-transparent septa (90), which have a structure capable of diffusing the light and are arranged one spaced in front of the other in the space between the rear sidewall (6a) of the light-guide plate (6) and said lighting assembly (7), so as to be crossed in sequence by the light coming from the lighting assembly (7).

9. Automotive lighting unit according to claim 8, wherein one or more of said semi-transparent septa (90) are made of a transparent polymeric material and have at least one of the two faces satinized.

10. Automotive lighting unit according to claim 8 or 9, wherein one or more of said semi-transparent septa (90) are made of a transparent polymeric material that incorporates reflecting corpuscles within itself.

11. Automotive lighting unit according to any one of the preceding claims, wherein said diffusing filter (8) is made in a single piece with said light-guide plate (6).

12. Automotive lighting unit according to any one of the preceding claims, wherein said lighting assembly (7) comprises: a series of LEDs (10), which are placed close to the bottom of the rigid container (5), so as to illuminate the rear sidewall (6a) of the light-guide plate (6) through the diffusing filter (8); and a converging optical group (12), which is placed above the LEDs (10) and is structured so as to deflect the light beam exiting the individual LEDs (10) towards said diffusing filter (8); said converging optical group (12) being made in a single piece with said diffusing filter (8).

13. Automotive lighting unit according to any one of the preceding claims, wherein said front bezel (3) has an opaque structure.

14. Automotive lighting unit according to any one of the preceding claims, wherein said front bezel (30) has a central sector (30a) with translucent structure, which surrounds and delimits said through slit (4); the light-guide plate (6), being structured so as to backlight said central sector (30a).

15. Automotive lighting unit according to claim 14, in which said central sector (30a) is shaped substantially like a hopper and/or is coloured.

16. Automotive lighting unit according to claim 14 or 15, wherein one or both the major faces of said light-guide plate (6) are provided with at least one transversal step or shoulder (6c), which is structured so as to cause a localised coming out of part of the light travelling within the body of the light-guide plate (8) by total internal reflection, so as to backlight the central sector (30a) of said front bezel (30).
